# EUROPEAN PATENT SPECIFICATION

(11) **EP 4 067 560 B1**
(45) Date of publication and mention of the grant of the patent: **18.06.2025**
(21) Application number: 20894605.3
(22) Date of filing: 29.10.2020
(51) Int. Cl.: D06F 58/22, D06F 58/02, B01D 46/10, B01D 46/24

(54) **ANNULAR FILTERING ASSEMBLY AND CLOTHES DRYING DEVICE**
RINGFÖRMIGE FILTERANORDNUNG UND WÄSCHETROCKNER
ENSEMBLE FILTRANT ANNULAIRE ET DISPOSITIF DE SÉCHAGE DE VÊTEMENTS

(30) Priority: 26.11.2019 CN 201911177020; 26.11.2019 CN 201911177008
(43) Date of publication of application: 05.10.2022
(73) Proprietor: Qingdao Haier Drum Washing Machine Co., Ltd., Qingdao Shandong 266101 (CN); Haier Smart Home Co., Ltd., Qingdao, Shandong 266101 (CN)
(72) Inventor: LV, Peishi, Qingdao, Shandong 266101 (CN); LI, Quande, Qingdao, Shandong 266101 (CN); BING, Jindong, Qingdao, Shandong 266101 (CN); WANG, Jian, Qingdao, Shandong 266101 (CN); BATT, Geoff, Qingdao, Shandong 266101 (CN)
(74) Representative: Bauer, Dirk
(86) International application number: PCT/CN2020/124856
(87) International publication number: WO 2021/103917

(56) References cited:
- EP-A1- 0 045 288
- EP-A1- 2 745 909
- EP-A1- 3 246 455
- WO-A1-94/19088
- CN-A- 1 133 074
- CN-A- 1 133 074
- CN-A- 102 257 207
- CN-A- 102 257 207
- CN-A- 102 653 918
- CN-A- 110 402 689
- CN-U- 207 950 852
- CN-U- 209 367 962
- CN-U- 211 772 213
- CN-U- 211 772 214
- CN-U- 211 772 215
- CN-U- 211 772 216
- CN-U- 211 772 217
- CN-U- 211 772 218
- CN-U- 211 772 219
- CN-U- 211 772 220
- CN-U- 211 772 221
- CN-U- 211 772 222
- CN-U- 211 772 241
- CN-U- 211 772 242
- CN-U- 211 772 243
- CN-U- 211 972 832
- CN-U- 211 972 842
- GB-A- 2 295 667
- US-A- 5 635 062
- US-A1- 2011 225 838

## Description

### FIELD OF THE INVENTION

The present invention belongs to the technical field of filtering, and specifically provides an annular filter assembly and a clothing drying apparatus.

### BACKGROUND OF THE INVENTION

Filtering is a process of refining and purifying a fluid by a special device. The special device is a filter device, and the fluid may be liquids such as water, or gases such as air, or solids such as quicksand. The filter device is widely used in fields such as household appliance, agriculture, experiment, industrial production, etc.

Taking a clothing drying apparatus in the field of household appliance as an example, the common clothing drying apparatus includes a drum clothing dryer and a clothing care machine, etc. Taking the drum clothing dryer as an example, generally, a filtering mode of the traditional drum clothing dryer is to provide a fixed filter screen in an air duct for filtering. Due to the limitation of the closed structure of the air duct, it is very inconvenient to clean the filter screen, resulting in a poor user experience in use. The prior art has developed a filter device with exchangeable filter sections. For example, PCT patent application WO1994019088A1 discloses a device for filtering liquids. The device has an annular disc with at least one perforated side wall, and a plurality of separate section of a filter medium are applied onto frames and each said section covers a part of the perforated side wall. Moreover, European patent application EP2745909A1 discloses a stream strainer, wherein it has a skeleton-like tube body and at least two shell-type individual elements which are exchangeable. However, the exchangeable filter sections are easily fell off during application.

Accordingly, there is a need in the art for a new annular filter assembly and a clothing drying apparatus to solve the above problem.

### SUMMARY OF THE INVENTION

In order to solve the above problem, that is, to solve the problem how the ensure the stability of the exchangeable filter section , the present disclosure provides an annular filter assembly as set out in the appended set of claims.

It can be understood by those skilled in the art that in the preferred technical solutions of the present disclosure, the plurality of arc-shaped filter screens and the annular filter bracket are detachably connected, so that each of the arc-shaped filter screens can be detached from the annular filter bracket separately, which facilitates cleaning, replacement and maintenance of the filter screens. In addition, by adopting the structure of the plurality of arc-shaped filter screens, if one of the arc-shaped filter screens is damaged, only this damaged arc-shaped filter screen has to be repaired or replaced, with no need to detach all the filter screens, thereby reducing the maintenance cost for the user and improves the user experience in use. Further, the arc-shaped filter screens are accommodated by the accommodating groove, so that a certain positioning effect can be realized on the arc-shaped filter screens, the arc-shaped filter screens can be prevented from displacing, and the stability of the structure can be further improved. Further, the inner surfaces of the arc-shaped filter screens are set flush with the inner surface of the annular filter bracket. Through such an arrangement, the arc-shaped filter screens are prevented from protruding beyond a groove top of accommodating groove, so that at the same time of improving structural aesthetics, it is ensured that the arc-shaped filter screens will not be easily scratched by foreign objects to move out of the accommodating groove.

Further, the plurality of arc-shaped filter screens are all connected with the annular filter bracket by snap-fit. Through such an arrangement, a detachment and assembly efficiency of the arc-shaped filter screens and the annular filter bracket can be improved, and the detachment and assembly of the arc-shaped filter screens are facilitated, thus further improving the user experience in use.

Further, the rib structures can ensure the snap-fit effect on the arc-shaped filter screens, and the stability of the structure is improved.

Further, the first ribs and the second ribs may snap-fit the arc-shaped filter screens on the annular filter bracket from both sides of the arc-shaped filter screens, which can further improve the snap-fit effect on the arc-shaped filter screens, and further improve structural stability.

Further, arc lengths of all the arc-shaped filter screens may be equal. Through such an arrangement, it is only necessary to produce an arc-shaped filter screen having the same length in technological production, which facilitates a unified structural design of product, avoid setting different lengths and requiring arc-shaped filter screens of various lengths as spare, and facilitates the user to replace the arc-shaped filter screens.

Further, the accommodating groove may be an annular accommodating groove, that is, all the arc-shaped filter screens can be accommodated by the annular accommodating groove, so that the structure of the product is simplified while positioning the arc-shaped filter screens.

In another aspect, the present disclosure also provides a clothing drying apparatus, which includes a cabinet assembly and a drying drum; the cabinet assembly includes a front panel and a front support mechanism, the front support mechanism is arranged on the front panel, and the front panel is provided with a clothing throw-in port in communication with an interior of the drying drum; the clothing drying apparatus further includes the above annular filter assembly, the annular filter bracket is arranged between the front support mechanism and the drying drum, and the annular filter bracket is arranged to be capable of rotating together with the drying drum. Through such an arrangement, the annular filter assembly can fully filter out the lint in the drying drum, and the area of the annular filter assembly is made large enough; moreover, the filtering is performed in a rotary manner, so that there is no dead end in the filtering, the filtering effect is improved, and the user experience in use is improved.

Further, the clothing drying apparatus further may include a lint cleaning member and a lint collecting member, which are both arranged on the front support mechanism; in the process of driving the annular filter bracket to rotate by the drying drum, the lint cleaning member can clean up the lint on the plurality of arc-shaped filter screens, and the lint collecting member can collect the cleaned up lint. Through such an arrangement, the lint adhered to the annular filter assembly can be removed into the lint collecting member under the action of the lint cleaning member to complete the operation of collecting the lint. The user does not need to clean the annular filter assembly frequently, which greatly improves the user experience in use. Moreover, the lint cleaning member and the lint collecting member are both arranged on the front support mechanism, so they do not occupy other space and will not affect the normal use by the user.

### BRIEF DESCRIPTION OF THE DRAWINGS

FIG. 1 is a schematic structural view of the annular filter assembly of the first solution of the present invention;
FIG. 2 is a partially enlarged view of FIG. 1;
FIG. 3 is a first schematic structural view of the drum clothing dryer of the first solution of the present invention;
FIG. 4 is a second schematic structural view of the drum clothing dryer of the first solution of the present invention;
FIG. 5 is a third schematic structural view of the drum clothing dryer of the first solution of the present invention;
FIG. 6 is a A-A sectional view of FIG. 5;
FIG. 7 is a partially enlarged view of FIG. 6; and
FIG. 8 is a fourth schematic structural view of the drum clothing dryer of the first solution of the present invention.

### Reference signs in the first solution:

1: annular filter bracket; 11: first rib; 12: second rib; 2: arc-shaped filter screen; 3: front panel; 4: front support mechanism; 5: drying drum; 6: lint cleaning member; 7: lint collecting member.

### DETAILED DESCRIPTION OF THE EMBODIMENT(S) OF THE INVENTION

Preferred embodiments of the present invention will be described below with reference to the accompanying drawings. It should be understood by those skilled in the art that these embodiments are only used to explain the technical principles of the present invention, and are not intended to limit the scope of protection of the present disclosure.

It should be noted that in the description of the present invention, terms indicating directional or positional relationships, such as "center", "upper", "lower", "top", "bottom", "inner", "outer" and the like, are based on the directional or positional relationships shown in the accompanying drawings. They are only used for ease of description, and do not indicate or imply that the device or element must have a specific orientation, or be constructed or operated in a specific orientation, and therefore they should not be considered as limitations to the present disclosure. In addition, terms "first" and "second" are only used for descriptive purposes, and should not be interpreted as indicating or implying relative importance.

In addition, it should also be noted that in the description of the present invention, unless otherwise clearly specified and defined, terms "arrange", "install", "connect" and "connection" should be understood in a broad sense; for example, the connection may be a fixed connection, or may also be a detachable connection, or an integral connection; it may be a mechanical connection, or an electrical connection; it may be a direct connection, or an indirect connection implemented through an intermediate medium, or it may be internal communication between two elements. For those skilled in the art, the specific meaning of the above terms in the present disclosure can be interpreted according to specific situations.

In view of the problem pointed out in the "BACKGROUND OF THE INVENTION" that it is inconvenient to clean the existing fixed filter devices, which results in a poor user experience in use, the present disclosure provides an annular filter assembly and a clothing drying apparatus, aiming at facilitating detachment, maintenance and replacement of the filter device and improving the user experience in use.

It should be pointed out that the annular filter assembly of the present disclosure can be applied to various fields such as production and processing, washing and caring, dust removal and purification, and ambient temperature regulation. In the following, the technical solution of the present disclosure will be described in greater detail in connection with the structure of the annular filter assembly itself and a clothing drying apparatus using the annular filter assembly of the present disclosure in the field of washing and caring, respectively.

First, the structure of the annular filter assembly itself of the present disclosure will be described.

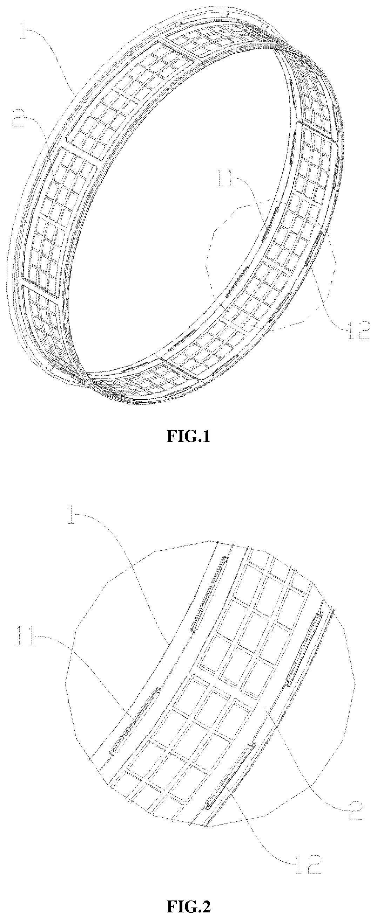

Specifically, as shown in FIGS. 1 and 2, the annular filter assembly of the present disclosure includes an annular filter bracket 1 and a plurality of arc-shaped filter screens 2. The plurality of arc-shaped filter screens 2 are all detachably connected with the annular filter bracket 1, and the plurality of arc-shaped filter screens 2 are arranged in sequence in a circumferential direction of the annular filter bracket 1. The arc-shaped filter screens 2 can be detachably connected with the annular filter bracket 1 by threads, snap-fit, bonding and/or magnetic adsorption, and all the arc-shaped filter screens 2 can be connected with the annular filter bracket 1 in the same way or in different ways. Those skilled in the art can flexibly set the specific connection means of the arc-shaped filter screens 2 and the annular filter bracket 1 in practical applications. The adjustment and change to the specific connection means of the arc-shaped filter screens 2 and the annular filter bracket 1 do not constitute limitations to the present disclosure, and they should all be defined within the scope of protection of the present disclosure. In addition, when the plurality of arc-shaped filter screens 2 are arranged in sequence in the circumferential direction of the annular filter bracket 1, each two adjacent arc-shaped filter screens 2 may be arranged against each other, or they may be arranged slightly spaced apart. Those skilled in the art can flexibly set the arrangement of the plurality of arc-shaped filter screens 2 in practical applications, as long as the plurality of arc-shaped filter screens 2 are arranged in sequence in the circumferential direction of the annular filter bracket 1. In addition, arc lengths of all the arc-shaped filter screens 2 may be equal to each other, or not equal to each other, and those skilled in the art can flexibly set the arc lengths of the arc-shaped filter screens 2 in practical applications.

Preferably, the plurality of arc-shaped filter screens 2 are all connected with the annular filter bracket 1 by snap-fit. The arc-shaped filter screens 2 can be snap-fit with the annular filter bracket 1 through a claw structure, or the arc-shaped filter screens 2 can be snap-fit with the annular filter bracket 1 through a rib structure, or the arc-shaped filter screens 2 can be snap-fit with the annular filter bracket 1 through a clasp structure, or the arc-shaped filter screens 2 can be snap-fit with the annular filter bracket 1 through an elastic clip structure, or the arc-shaped filter screens 2 can be snap-fit with the annular filter bracket 1 through a combination of the above means. Those skilled in the art can flexibly set the specific snap-fit means of the arc-shaped filter screens 2 and the annular filter bracket 1 in practical applications. The adjustment and change to the specific snap-fit means of the arc-shaped filter screens 2 and the annular filter bracket 1 do not constitute limitations to the present disclosure, and they should all be defined within the scope of protection of the present disclosure.

Preferably, the annular filter bracket 1 is provided with rib structures, and the arc-shaped filter screens 2 are snap-fit on the annular filter bracket 1 through the rib structures. The rib structures can snap-fit the arc-shaped filter screens 2 from one side of the arc-shaped filter screens 2, and can also snap-fit the arc-shaped filter screens 2 from both sides of the arc-shaped filter screens 2. Those skilled in the art can flexibly set the specific means of snap-fitting the arc-shaped filter screens 2 by the rib structures in practical applications. The adjustment and change to the specific snap-fit means of the arc-shaped filter screens 2 do not constitute limitations to the present disclosure, and they should all be defined within the scope of protection of the present disclosure.

Preferably, as shown in FIGS. 1 and 2, the rib structures include first ribs 11 and second ribs 12 that are formed on the annular filter bracket 1 and are located on both sides of the arc-shaped filter screens 2 respectively. The first ribs 11 and the second ribs 12 together snap-fit the arc-shaped filter screens 2 on the annular filter bracket 1. Each arc-shaped filter screen 2 corresponds to one first rib 11 or a plurality of first ribs 11. Similarly, each arc-shaped filter screen 2 corresponds to one second rib 12 or a plurality of second ribs 12. Of course, the first rib 11 can also snap-fit two adjacent arc-shaped filter screens 2 at the same time. Similarly, the second rib 12 can also snap-fit two adjacent arc-shaped filter screens 2 at the same time. Those skilled in the art can flexibly set the number and snap-fit means of the first ribs 11 and the second ribs 12 in practical applications. The adjustment and change to the number and snap-fit means of the first ribs 11 and the second ribs 12 do not constitute limitations to the present disclosure, and they should all be defined within the scope of protection of the present disclosure.

Preferably, an accommodating groove is formed on the annular filter bracket 1, and the arc-shaped filter screens 2 are arranged in the accommodating groove. In a possible situation, the accommodating groove is an annular accommodating groove, and the plurality of arc-shaped filter screens 2 are arranged in sequence in the annular accommodating groove in the circumferential direction of the annular filter bracket 1. Of course, the accommodating groove may also include a plurality of arc-shaped accommodating grooves, and the arc-shaped accommodating grooves correspond to the arc-shaped filter screens 2 in a one-to-one correspondence. The corresponding arc-shaped filter screen 2 is accommodated by the arc-shaped accommodating groove. Of course, it is also possible that one arc-shaped accommodating groove corresponds to two arc-shaped filter screens 2. Those skilled in the art can flexibly set the specific structure of the accommodating groove in practical applications, as long as the accommodating groove can accommodate the plurality of arc-shaped filter screens 2.

Preferably, inner surfaces of the arc-shaped filter screens 2 are set flush with an inner surface of the annular filter bracket 1. As shown in FIGS. 1 and 2, bottom surfaces of the arc-shaped filter screens 2 abut against a groove bottom of the accommodating groove, and top surfaces of the arc-shaped filter screens 2 are flush with a groove top edge of the accommodating groove.

Hereinafter, a description will be given in connection with a clothing drying apparatus which uses the annular filter assembly of the present disclosure. The clothing drying apparatus can be a drum clothing dryer, a cabinet clothing dryer or a drawer clothing dryer, etc. In the following, only the clothing drying apparatus which is a front-open drum clothing dryer will be described exemplarily.

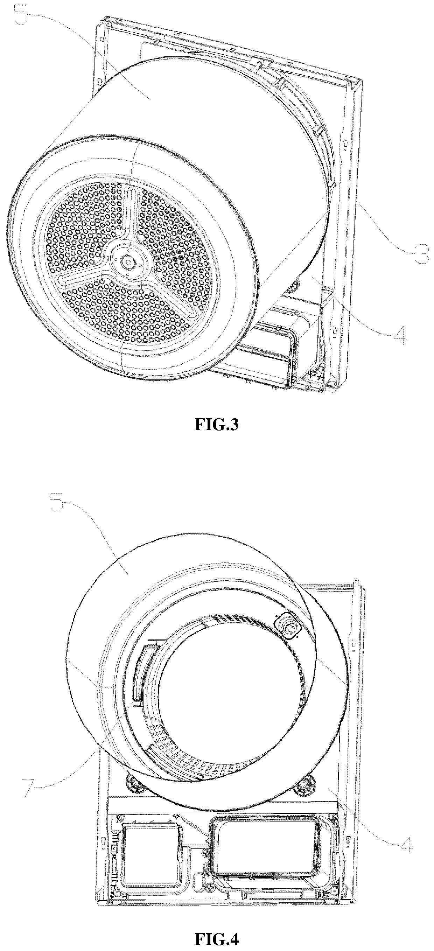

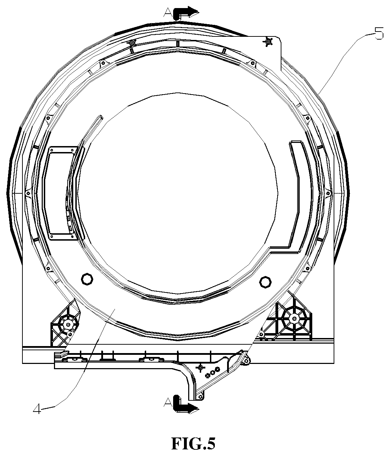

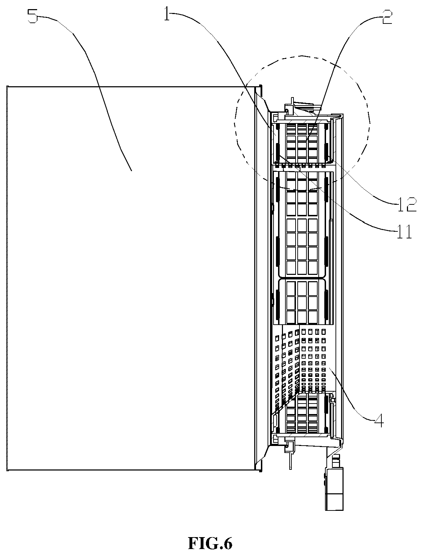

Specifically, as shown in FIGS. 3 to 8, the drum clothing dryer includes a cabinet assembly and a drying drum 5; the cabinet assembly includes a front panel 3 and a front support mechanism 4, the front support mechanism 4 is arranged on the front panel 3, and the front panel 3 is provided with a clothing throw-in port in communication with an interior of the drying drum 5; the clothing drying apparatus also includes the above annular filter assembly, the annular filter bracket 1 is arranged between the front support mechanism 4 and the drying drum 5, and the annular filter bracket 1 is arranged to be capable of rotating together with the drying drum 5. When the drum clothing dryer adopts a single-cylinder structure, the drying drum 5 is the single cylinder, and the drying drum 5 can be directly connected with the annular filter assembly. When the drum clothing dryer adopts a dual-cylinder structure, the drying drum 5 is an inner one of the two cylinders, which is arranged in an outer cylinder. The inner cylinder is connected with a driving motor and rotates relative to the outer cylinder when driven by the driving motor. The inner cylinder can be directly connected with the annular filter assembly, and the inner cylinder drives the annular filter assembly to rotate when the inner cylinder is rotating. In addition, the front support mechanism 4 may adopt a structure of a single support member, such as a support frame, a support plate or a support seat, etc. Of course, the front support mechanism 4 may also adopt a structure of a combination of multiple support members, such as multiple support frames, multiple support plates, multiple support seats, a support frame and a support plate, a support frame and a support seat, or a support plate and a support seat, etc. Those skilled in the art can flexibly set the specific structure of the front support mechanism 4 in practical applications. The adjustment and change to the specific structure of the front support mechanism 4 do not constitute limitations to the present disclosure, and they should all be defined within the scope of protection of the present disclosure.

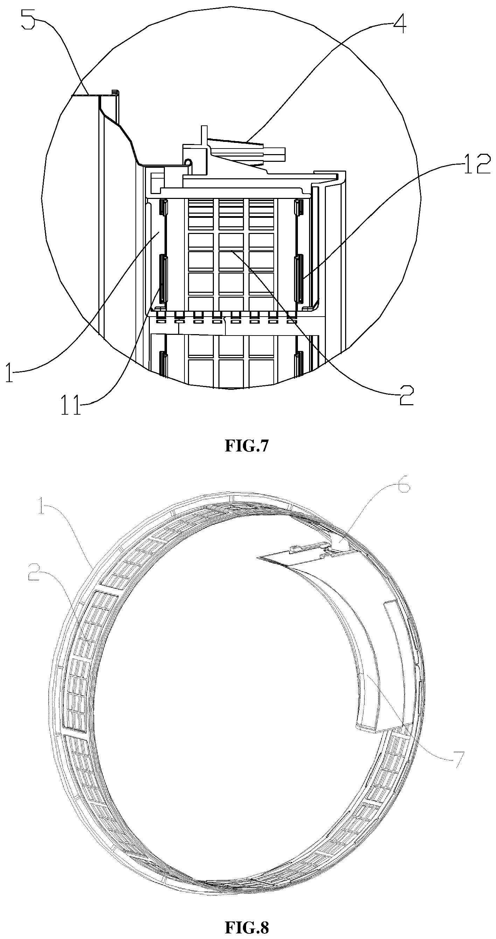

As shown in FIGS. 4 and 8, the drum clothing dryer also includes a lint cleaning member 6 and a lint collecting member 7, which are both arranged on the front support mechanism 4; in the process of driving the annular filter bracket 1 to rotate by the drying drum 5, the lint cleaning member 6 can clean up the lint on the plurality of arc-shaped filter screens 2, and the lint collecting member 7 can collect the cleaned up lint. The lint cleaning member 6 can adopt the structure of a scraper, or can adopt the structure of a brush, and those skilled in the art may flexibly set the specific structure of the lint cleaning member 6 in practical applications. The adjustment and change to the specific structure of the lint cleaning member 6 do not constitute limitations to the present disclosure, and they should all be defined within the scope of protection of the present disclosure. The lint collecting member 7 can adopt the structure of a lint collecting box, or can adopt the structure of a lint collecting groove. Those skilled in the art can flexibly set the specific structure of the lint collecting member 7 in practical applications. The adjustment and change to the specific structure of the lint collecting member 7 do not constitute limitations to the present disclosure, and they should all be defined within the scope of protection of the present disclosure.

## Claims

1. An annular filter assembly, comprising an annular filter bracket (1) and a plurality of arc-shaped filter screens (2), wherein the plurality of arc-shaped filter screens (2) are all detachably connected with the annular filter bracket (1), and the plurality of arc-shaped filter screens (2) are arranged in sequence in a circumferential direction of the annular filter bracket (1);
wherein the annular filter bracket (1) is formed with an accommodating groove, and the arc-shaped filter screens (2) are arranged in the accommodating groove,
wherein inner surfaces of the arc-shaped filter screens (2) are set flush with an inner surface of the annular filter bracket (1);
**characterized in that** the plurality of arc-shaped filter screens (2) are all connected with the annular filter bracket (1) by snap-fit.

2. The annular filter assembly according to claim 1, wherein the annular filter bracket (1) is provided with rib structures, and the arc-shaped filter screens (2) are snap-fit on the annular filter bracket (1) through the rib structures.

3. The annular filter assembly according to claim 2, wherein the rib structures comprise first ribs (11) and second ribs (12) that are formed on the annular filter bracket (1) and are located on both sides of the arc-shaped filter screens (2) respectively, and the arc-shaped filter screens (2) are snap-fit on the annular filter bracket (1) by the first ribs (11) and the second ribs (12) altogether.

4. The annular filter assembly according to claim 1, wherein arc lengths of all the arc-shaped filter screens (2) are equal.

5. The annular filter assembly according to claim 1, wherein the accommodating groove is an annular accommodating groove, and the plurality of arc-shaped filter screens (2) are arranged in sequence in the annular accommodating groove in the circumferential direction of the annular filter bracket (1).

6. A clothing drying apparatus, comprising a cabinet assembly and a drying drum (5); wherein the cabinet assembly comprises a front panel (3) and a front support mechanism (4), the front support mechanism (4) is arranged on the front panel (3), and the front panel (3) is provided with a clothing throw-in port in communication with an interior of the drying drum (5); the clothing drying apparatus further comprises the annular filter assembly according to any one of claims 1 to 5; and
wherein the annular filter bracket (1) is arranged between the front support mechanism (4) and the drying drum (5), and the annular filter bracket (1) is arranged to be capable of rotating together with the drying drum (5).

7. The clothing drying apparatus according to claim 6, wherein the clothing drying apparatus further comprises a lint cleaning member (6) and a lint collecting member (7); the lint cleaning member (6) and the lint collecting member (7) are both arranged on the front support mechanism (4); in the process of driving the annular filter bracket (1) to rotate by the drying drum (5), the lint cleaning member (6) can clean up the lint on the plurality of arc-shaped filter screens (2), and the lint collecting member (7) can collect the cleaned up lint.

## Patentansprüche

1. Ringförmige Filteranordnung, die eine ringförmige Filterhalterung (1) und eine Vielzahl an bogenförmigen Filtersieben (2) aufweist, wobei die Vielzahl an bogenförmigen Filtersieben (2) alle entfernbar mit der ringförmigen Filterhalterung (1) verbunden sind, und die Vielzahl an bogenförmigen Filtersieben (2) in Reihe in einer Umfangsrichtung der ringförmigen Filterhalterung (1) angeordnet sind;
wobei die ringförmige Filterhalterung (1) mit einer Aufnahmerille ausgebildet ist und die bogenförmigen Filtersiebe (2) in der Aufnahmerille angeordnet sind, wobei Innenflächen der bogenförmigen Filtersiebe (2) bündig mit einer Innenfläche der ringförmigen Filterhalterung (1) sind,
**dadurch gekennzeichnet, dass** die Vielzahl an bogenförmigen Filtersieben (2) mittels Einrasten mit der ringförmigen Filterhalterung (1) verbunden ist.

2. Ringförmige Filteranordnung nach Anspruch 1, wobei die ringförmige Filterhalterung (1) mit Rippenstrukturen versehen ist und die bogenförmigen Filtersiebe (2) durch die Rippenstrukturen auf der ringförmigen Filterhalterung (1) einrasten.

3. Ringförmige Filteranordnung nach Anspruch 2, wobei die Rippenstrukturen erste Rippen (11) und zweite Rippen (12) aufweisen, die auf der ringförmigen Filterhalterung (1) ausgebildet sind und sich jeweils an beiden Seiten der bogenförmigen Filtersiebe (2) befinden, und wobei die bogenförmigen Filtersiebe (2) durch die ersten Rippen (11) und die zweiten Rippen (12) gemeinsam auf der ringförmigen Filterhalterung (1) einrasten.

4. Ringförmige Filteranordnung nach Anspruch 1, wobei die Bogenlänge aller bogenförmiger Filtersiebe (2) gleich ist.

5. Ringförmige Filteranordnung nach Anspruch 1, wobei die Aufnahmerille eine ringförmige Aufnahmerille ist und die Vielzahl an bogenförmigen Filtersieben (2) in Reihe in der ringförmigen Aufnahmerille in der Umfangsrichtung der ringförmigen Filterhalterung (1) angeordnet ist.

6. Wäschetrocknergerät, das eine Schrankkonstruktion und eine Trockentrommel (5) aufweist; wobei die Schrankkonstruktion eine Vorderplatte (3) und einen vorderen Trägermechanismus (4) aufweist, wobei der vordere Trägermechanismus (4) auf der Vorderplatte (3) angeordnet ist und die Vorderplatte (3) mit einer Öffnung zum Hineinwerfen von Wäsche in Verbindung mit einem Innenraum der Trockentrommel (5) versehen ist; wobei das Wäschetrocknergerät ferner die ringförmige Filteranordnung gemäß einem der Ansprüche 1 bis 5 aufweist; und
wobei die ringförmige Filterhalterung (1) zwischen dem vorderen Trägermechanismus (4) und der Trockentrommel (5) angeordnet ist und die ringförmige Filterhalterung (1) derart angeordnet ist, sich gemeinsam mit der Trockentrommel (5) drehen zu können.

7. Wäschetrocknergerät nach Anspruch 6, wobei das Wäschetrocknergerät ferner ein Flusenreinigungselement (6) und ein Flusensammelelement (7) aufweist; wobei das Flusenreinigungselement (6) und das Flusensammelelement (7) beide auf dem vorderen Trägermechanismus (4) angeordnet sind; beim Vorgang des Antreibens der ringförmigen Filterhalterung (1) zur Drehung durch die Trockentrommel (5) kann das Flusenreinigungselement (6) die Flusen auf der Vielzahl an bogenförmigen Filtersieben (2) entfernen und das Flusensammelelement (7) kann die entfernten Flusen sammeln.

## Revendications

1. Ensemble de filtre annulaire, comprenant un support de filtre annulaire (1) et une pluralité d'écrans de filtre arqués (2), dans lequel la pluralité d'écrans de filtre arqués (2) sont tous reliés de façon détachable au support de filtre annulaire (1), et la pluralité d'écrans de filtre arqués (2) sont disposés en séquence dans une direction circonférentielle du support de filtre annulaire (1) ;
dans lequel le support de filtre annulaire (1) est formé avec une rainure de réception, et les écrans de filtre arqués (2) sont disposés dans la rainure de réception,
dans lequel des surfaces intérieures des écrans de filtre arqués (2) sont mises en affleurement avec une surface intérieure du support de filtre annulaire (1) ;
**caractérisé en ce que** la pluralité d'écrans de filtre arqués (2) sont tous reliés au support de filtre annulaire (1) par encliquetage.

2. Ensemble de filtre annulaire selon la revendication 1, dans lequel le support de filtre annulaire (1) est doté de structures de nervure, et les écrans de filtre arqués (2) sont encliquetés sur le support de filtre annulaire (1) par le biais des structures de nervure.

3. Ensemble de filtre annulaire selon la revendication 2, dans lequel les structures de nervure comprennent des premières nervures (11) et des deuxièmes nervures (12) formées sur le support de filtre annulaire (1) et situées des deux côtés des écrans de filtre arqués (2) respectivement, et les écrans de filtre arqués (2) sont encliquetés sur le support de filtre annulaire (1) par le biais des premières nervures (11) et des deuxièmes nervures (12) conjointement.

4. Ensemble de filtre annulaire selon la revendication 1, dans lequel des longueurs d'arc de tous les écrans de filtre arqués (2) sont égales.

5. Ensemble de filtre annulaire selon la revendication 1, dans lequel la rainure de réception est une rainure de réception annulaire, et la pluralité d'écrans de filtre arqués (2) sont disposés en séquence dans la rainure de réception annulaire dans la direction circonférentielle du support de filtre annulaire (1).

6. Appareil de séchage de vêtements, comprenant un ensemble d'armoire et un tambour de séchage (5) ; dans lequel l'ensemble d'armoire comprend un panneau avant (3) et un mécanisme de support avant (4), le mécanisme de support avant (4) est disposé sur le panneau avant (3), et le panneau avant (3) est doté d'un orifice d'introduction de vêtements en communication avec un intérieur du tambour de séchage (5) ; l'appareil de séchage de vêtements comprend en outre l'ensemble de filtre annulaire selon l'une quelconque des revendications 1 à 5 ; et
dans lequel le support de filtre annulaire (1) est disposé entre le mécanisme de support avant (4) et le tambour de séchage (5), et le support de filtre annulaire (1) est conçu de manière à pouvoir tourner conjointement avec le tambour de séchage (5).

7. Appareil de séchage de vêtements selon la revendication 6, dans lequel l'appareil de séchage de vêtements comprend en outre un élément de nettoyage de peluches (6) et un élément de collecte de peluches (7) ; l'élément de nettoyage de peluches (6) et l'élément de collecte de peluches (7) sont tous deux disposés sur le mécanisme de support avant (4) ; pendant l'entraînement du support de filtre annulaire (1) en rotation par le tambour de séchage (5), l'élément de nettoyage de peluches (6) peut nettoyer les peluches sur la pluralité d'écrans de filtre arqués (2), et l'élément de collecte de peluches (7) peut collecter les peluches nettoyées.
